# EUROPEAN PATENT SPECIFICATION

(11) **EP 3 462 018 B1**
(45) Date of publication and mention of the grant of the patent: **14.06.2023**
(21) Application number: 18196039.4
(22) Date of filing: 21.09.2018
(51) Int. Cl.: F03D 7/04, F03D 9/25, F03D 80/50, H02J 3/38, F03D 7/02

(54) **METHODS FOR ADAPTING WIND FARMS FOR GRID COMPLIANCE**
VERFAHREN ZUR ANPASSUNG VON WINDPARKS AN DIE NETZKONFORMITÄT
PROCÉDÉS D'ADAPTATION DE PARCS ÉOLIENS POUR CONFORMITÉ DE RÉSEAU

(30) Priority: 27.09.2017 US 201715716638
(43) Date of publication of application: 03.04.2019
(73) Proprietor: General Electric Company, Schenectady, NY 12345 (US)
(72) Inventor: ZALAR, Jonathan Henry, Greenville, SC 29615-4614 (US)
(74) Representative: Zimmermann & Partner Patentanwälte mbB

(56) References cited:
- EP-A1- 2 696 070
- WO-A1-2017/088879
- US-A1- 2006 171 086
- KAROUI RIDHA ET AL: "Repowering of the wind farm of Sidi-Daoud Tunisia", 2017 INTERNATIONAL CONFERENCE ON ADVANCED SYSTEMS AND ELECTRIC TECHNOLOGIES (IC_ASET), IEEE, 14 January 2017 (2017-01-14), pages 316-322, XP033124584, DOI: 10.1109/ASET.2017.7983712 [retrieved on 2017-07-18]
- John Mckenna: "Upgrade old turbines to their full potential", Windpower Monthly, 1 December 2012 (2012-12-01), pages 1-8, XP055553602, Retrieved from the Internet: URL:https://www.windpowermonthly.com/artic le/1161695/upgrade-old-turbines-full-poten tial [retrieved on 2019-02-07]

## Description

The present disclosure relates generally to wind farms, and more particularly to methods for adapting wind farms for grid compliance.

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate member support frame located within the nacelle. More specifically, in many wind turbines, the gearbox is mounted to the bedplate member via one or more torque supports or arms. The one or more rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

A plurality of wind turbines are commonly used in conjunction with one another to generate electricity and are commonly referred to as a "wind farm." Typical wind farms include a farm-level controller communicatively coupled to individual turbine controllers of each of the wind turbines in the wind farm. As such, the farm-level controller provides an interface between the power grid and each of the wind turbines. Thus, the farm-level controller communicates various commands to the turbine controllers.

For conventional wind farms, when the farm-level controller detects one or more constraints in the power grid, the farm-level controller is configured to send a shutdown command to each of the wind turbines in the wind farm. The individual turbine controllers then disconnect their respective wind turbine from the power grid and reduce the turbine speed to zero. When the shutdown command is released, the turbine controllers increase the turbine speed up to a cut-in speed and then reconnect the turbine back to the power grid.

At times, however, grid compliance may require the wind farm to remain connected to the power grid during periods of high or low voltage. Such capabilities are often referred to as zero voltage ride through, low voltage ride through, or high voltage ride through.

Many existing turbines in the field, however, are not equipped with such capabilities. Thus, a system and method for operating a wind farm such that the wind farm can be adapted for such grid compliance would be welcomed in the art. The article "Repowering of the wind farm of Sidi-Daoud Tunisia", by KAROUI RIDHA et al, 2017 INTERNATIONAL CONFERENCE ON ADVANCED SYSTEMS AND ELECTRIC TECHNOLOGIES (IC_ASET), IEEE, 14 January 2017, pages 316-322, XP033124584, shows repowering a complete wind farm.

Various aspects and advantages of the invention will be set forth in part in the following description, or may be clear from the description, or may be learned through practice of the invention.

In one aspect, the present disclosure is directed to a method according to claim 1 for controlling a wind farm connected to a power grid. The wind farm has a plurality of wind turbines. The method includes terminating use of an existing farm-level controller of the wind farm. The method also includes installing an upgraded farm-level controller in place of the existing farm-level controller. Further, the method includes communicatively coupling the upgraded farm-level controller to each of the plurality of wind turbines. Moreover, the method includes replacing at least one component of a subset of the wind turbines with an upgraded component capable of satisfying one or more grid requirements. Thus, the method also includes controlling the wind farm via the upgraded farm-level controller.

The component(s) includes an upgraded power converter of each of the wind turbines in the subset. The step of controlling the wind farm via the upgraded farm-level controller includes controlling the subset of wind turbines via the upgraded power converters and controlling remaining wind turbines via existing power converters. The subset of wind turbines includes from about 10% to about 50% of the plurality of wind turbines.

In further embodiments, the method may include controlling the subset of wind turbines so as to satisfy one or more frequency droop requirements of the power grid. In particular embodiments, the step of controlling the subset of wind turbines so as to satisfy one or more frequency droop requirements of the power grid may include communicating, via the upgraded farm-level controller, an upgraded network protocol with each of the wind turbines in the subset.

In several embodiments, the method may include removing the existing farm-level controller from the wind farm.

In additional embodiments, the grid requirements may include zero voltage ride through, low voltage ride through, or high voltage ride through.

In yet another aspect, the present disclosure is directed to a wind farm management system according to claim 6.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 illustrates a schematic diagram of one embodiment of a wind turbine power system according to the present disclosure;
FIG. 2 illustrates a block diagram of one embodiment of a controller suitable for use with the wind turbine power system shown in FIG. 1 ;
FIG. 3 illustrates a schematic view of one embodiment of a wind farm according to conventional construction;
FIG. 4 illustrates a flow diagram of one embodiment of a method for controlling a wind farm connected to a power grid according to the present disclosure;
FIG. 5 illustrates a schematic view of one embodiment of a wind farm according to the present disclosure, particularly illustrating termination of an existing farm-level controller;
FIG. 6 illustrates a schematic view of one embodiment of a wind farm according to the present disclosure, particularly illustrating an upgraded wind farm management system; and
FIG. 7 illustrates a schematic view of one embodiment of an upgraded farm-level controller communicating an upgraded network protocol to a plurality of wind turbine generators in a subset of wind turbines in a wind farm.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims

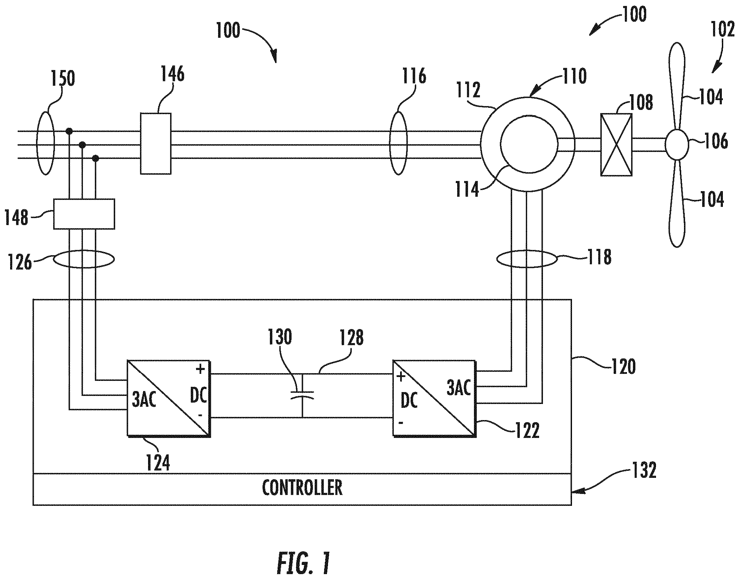

Referring now to the drawings, FIG. 1 illustrates a schematic diagram of one embodiment of a wind turbine power system 100 according to the present disclosure. Example aspects of the present disclosure are discussed with reference to the wind turbine power system 100 of FIG. 1 for purposes of illustration and discussion. Those of ordinary skill in the art, using the disclosures provided herein, should understand that example aspects of the present disclosure are also applicable in other power systems, such as a wind, solar, gas turbine, or other suitable power generation system. In the illustrated embodiment, the wind turbine power system 100 includes a rotor 102 includes a plurality of rotor blades 102 coupled to a rotatable hub 106, and together define a propeller. The propeller is coupled to an optional gearbox 108, which is, in turn, coupled to a generator 110. In accordance with aspects of the present disclosure, the generator 110 may be any suitable generator, including, but not limited to a doubly fed induction generator (DFIG) or a fully fed induction generator. Further, the generator 110 includes a stator 112 and a rotor 114. The stator 112 is typically coupled to a stator bus 116 and a power converter 120 via a rotor bus 118. The stator bus 116 provides an output multiphase power (e.g. three-phase power) from the stator 112 and the rotor bus 118 provides an output multiphase power (e.g. three-phase power) of the rotor 114.

Referring to the power converter 120, the generator 110 is coupled via the rotor bus 118 to a rotor-side converter 122. The rotor-side converter 122 is coupled to a line-side converter124 which in turn is coupled to a line-side bus 126. In example configurations, the rotor-side converter 122 and the line-side converter 124 are configured for normal operating mode in a three-phase, pulse width modulation (PWM) arrangement using insulated gate bipolar transistor (IGBT) switching elements. The rotor-side converter 122 and the line-side converter 124 can be coupled via a DC link 128 across which is the DC link capacitor 130.

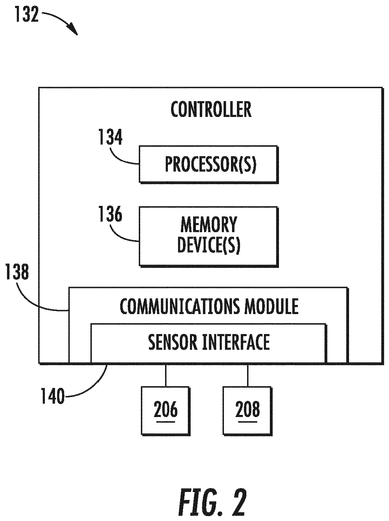

The wind turbine power system 100 may also include a turbine-level controller 132 configured to control the operation of the various components of the system 100 as well as implementing any method steps as described herein. Thus, the controller 132 can include any number of control devices. In one implementation, as shown in FIG. 2, the controller 132 can include one or more processor(s) 134 and associated memory device(s) 136 configured to perform a variety of computer-implemented functions and/or instructions (e.g., performing the methods, steps, calculations and the like and storing relevant data as disclosed herein). The instructions when executed by the processor 134 can cause the processor 134 to perform operations, including providing control commands to the various system components. Additionally, the controller 132 may include a communications module 138 to facilitate communications between the controller 132 and the various components of the power system 100, e.g. any of the components of FIG. 1. Further, the communications module 138 may include a sensor interface 140 (e.g., one or more analog-to-digital converters) to permit signals transmitted from one or more sensors to be converted into signals that can be understood and processed by the processors 176. It should be appreciated that the sensors (e.g. sensors 206, 208) may be communicatively coupled to the communications module 138 using any suitable means. For example, as shown, the sensors 206, 208 are coupled to the sensor interface 140 via a wired connection. However, in other embodiments, the sensors 206, 208 may be coupled to the sensor interface 140 via a wireless connection, such as by using any suitable wireless communications protocol known in the art. As such, the processor 134 may be configured to receive one or more signals from the sensors.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 134 is also configured to compute advanced control algorithms and communicate to a variety of Ethernet or serial-based protocols (Modbus, OPC, CAN, etc.). Additionally, the memory device(s) 136 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 136 may generally be configured to store suitable computer-readable instructions that, when implemented by the processor(s) 134, configure the controller 132 to perform the various functions as described herein.

During operation, alternating current (AC) power generated at the generator 110 by rotation of the rotor 102 is provided via a dual path to an electrical grid 150. The dual paths are defined by the stator bus 116 and the rotor bus 118. On the rotor bus side 118, sinusoidal multi-phase (e.g. three-phase) AC power is provided to the power converter 120. The rotor-side power converter 122 converts the AC power provided from the rotor bus 118 into direct current (DC) power and provides the DC power to the DC link 128. Switching elements (e.g. IGBTs) used in bridge circuits of the rotor side power converter 122 can be modulated to convert the AC power provided from the rotor bus 118 into DC power suitable for the DC link 128.

The line-side converter 124 converts the DC power on the DC link 128 into AC output power suitable for the electrical grid 150. In particular, switching elements (e.g. IGBTs) used in bridge circuits of the line-side power converter 124 can be modulated to convert the DC power on the DC link 128 into AC power on the line-side bus 126. The AC power from the power converter 120 can be combined with the power from the stator of the generator 110 to provide multi-phase power (e.g. three-phase power) having a frequency maintained substantially at the frequency of the electrical grid 150 (e.g. 50 Hz/60 Hz).

Various circuit breakers and switches, such as breakers 146, 148, can be included in the power system 100 to connect or disconnect corresponding buses, for example, when current flow is excessive and can damage components of the system 100 or for other operational considerations. Additional protection components can also be included in the power system 100.

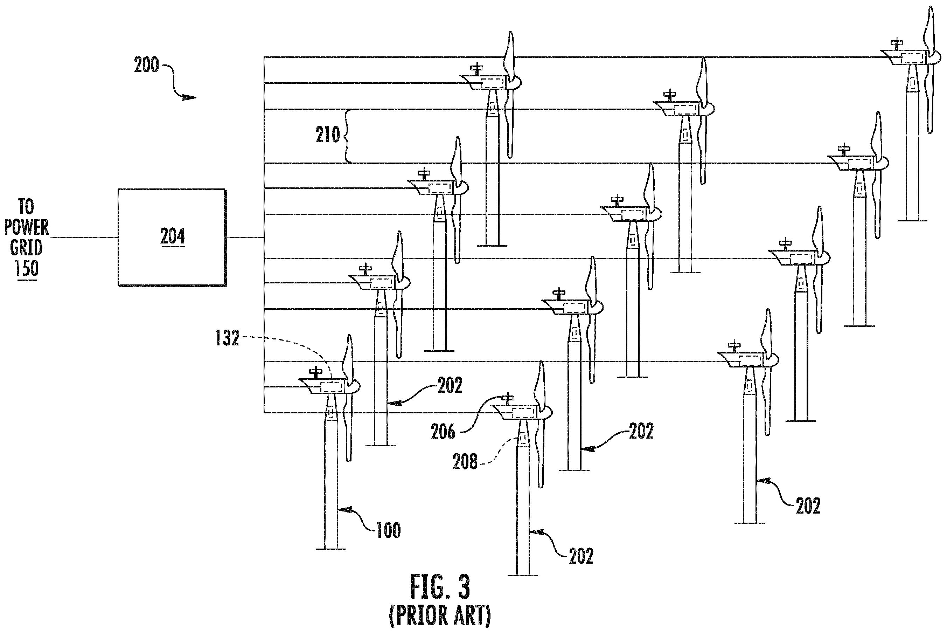

As mentioned, a plurality of wind turbines, such as the wind turbine power system 100 of FIG. 1, can be arranged together in a common geographic location and used in conjunction with one another to generate electricity. Such an arrangement is generally referred to as a wind farm. For example, as shown in FIG. 3, a wind farm 200 that is controlled according to the system and method of the present disclosure is illustrated. As shown, the wind farm 200 may include a plurality of wind turbines 202, including the wind turbine power system 100 described above, and a farm-level controller 204. For example, as shown in the illustrated embodiment, the wind farm 200 includes twelve wind turbines, including the wind turbine power system 100. However, in other embodiments, the wind farm 200 may include any other number of wind turbines, such as less than twelve wind turbines or greater than twelve wind turbines. In one embodiment, the controller 132 of the wind turbine power system 100 may be communicatively coupled to the farm-level controller 204 through a wired connection, such as by connecting the controller 132 through suitable communicative links 210 (e.g., a suitable cable). Alternatively, the controller 132 may be communicatively coupled to the farm-level controller 204 through a wireless connection, such as by using any suitable wireless communications protocol known in the art. In addition, the farm-level controller 204 may be generally configured similar to the controllers 132 for each of the individual wind turbines 202 within the wind farm 200.

In several embodiments, one or more of the wind turbines 202 in the wind farm 200 may include a plurality of sensors for monitoring various operating data points or control settings of the individual wind turbines 202 and/or one or more wind parameters of the wind farm 200. For example, as shown, each of the wind turbines 202 includes a wind sensor 206, such as an anemometer or any other suitable device, configured for measuring wind speeds or any other wind parameter. In addition, the wind turbine 202 may also include one or more additional sensors 208 for measuring additional operating parameters of the wind turbines 202. For instance, the sensors 208 may be configured to monitor the turbine speed and/or electrical properties of the generator 110 of each wind turbine 202. Alternatively, the sensors 208 may include any other sensors that may be utilized to monitor the power output of the wind turbines 202. It should also be understood that the wind turbines 202 in the wind farm 200 may include any other suitable sensor known in the art for measuring and/or monitoring wind parameters and/or wind turbine operating data.

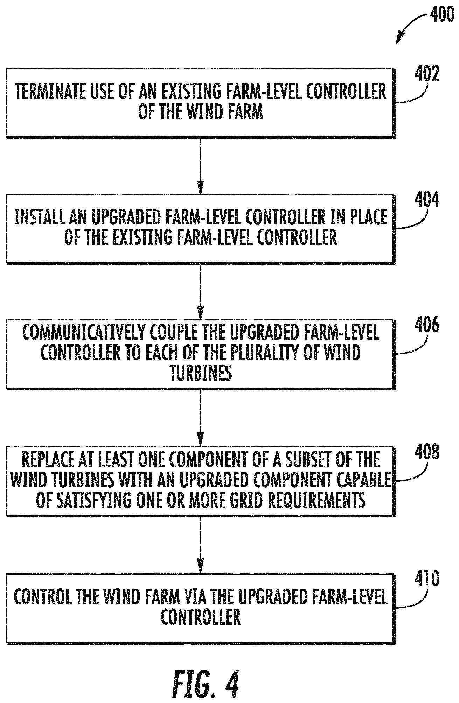

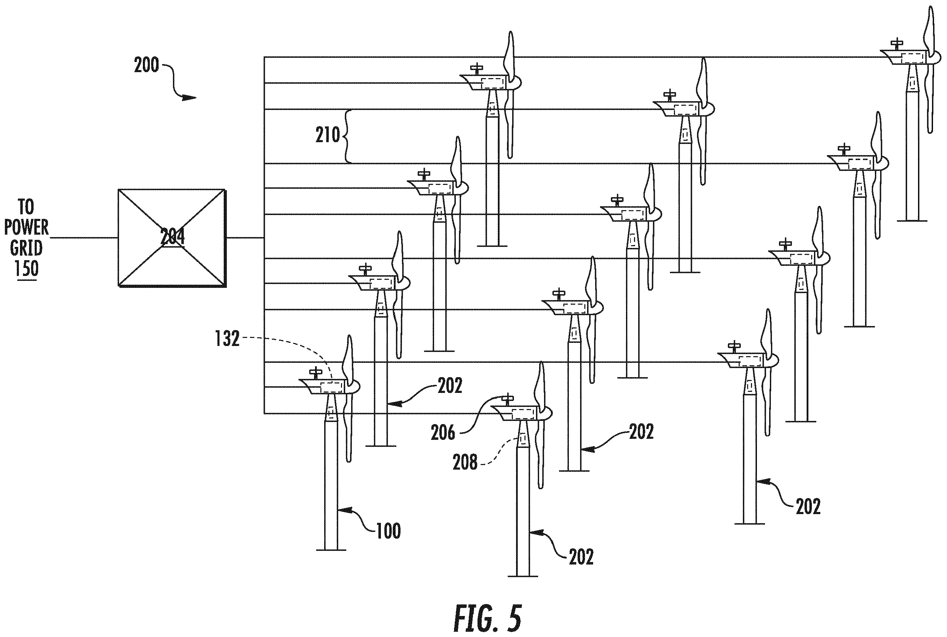

Referring now to FIG. 4, a flow diagram of one embodiment of a method 400 for adapting the wind farm 200 connected to the power grid 150 to satisfy one or more grid requirements and controlling the wind farm 200 based on the updated system is illustrated. As shown at 402, the method 400 includes terminating use of an existing farm-level controller 204 of the wind farm 200. For example, as shown in FIG. 5, the existing farm-level controller 204 of the wind farm 204 is terminated and disconnected from operation. In several embodiments, the method 400 may also include removing the existing farm-level controller 204 from the wind farm 200. Alternatively, the method 400 may include leaving the existing farm-level controller 204 in place.

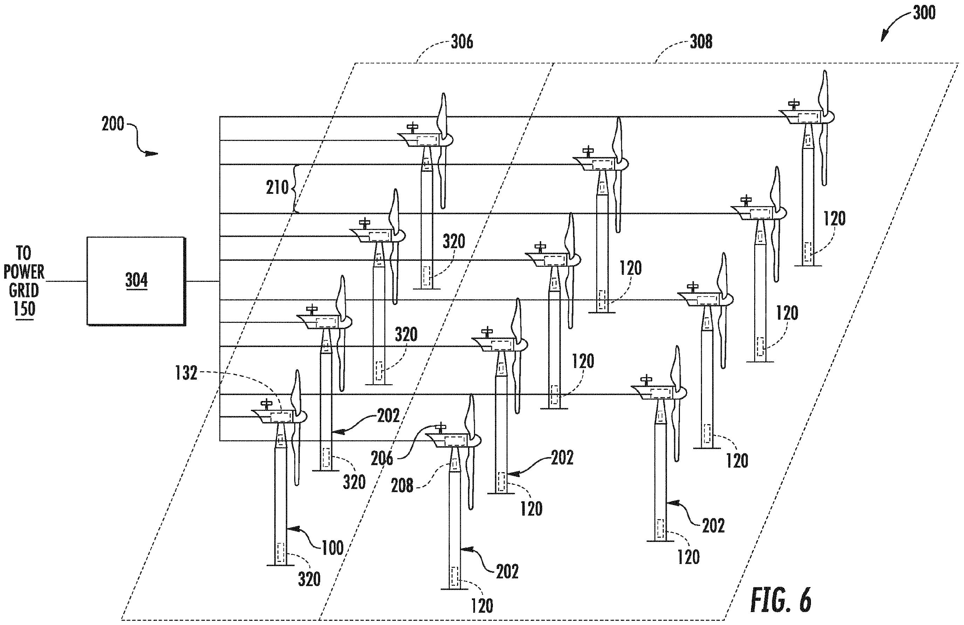

Referring back to FIG. 4, as shown at 404, the method 400 also includes installing an upgraded farm-level controller 304 in place of the existing farm-level controller 204. In addition, as shown at 406, the method 400 includes communicatively coupling the upgraded farm-level controller 304 to each of the plurality of wind turbines 202 in the wind farm 200. For example, as shown in FIG. 6, a schematic diagram of one embodiment of a wind farm management system 300 according to the present disclosure is illustrated. As shown, the existing farm-level controller 204 of the wind farm 204 has been replaced with the upgraded farm-level controller 304. Further, as shown, the upgraded farm-level controller 304 is communicatively coupled to each of the turbine-level controllers 132 of the wind turbines 202 in the wind farm 200 via one or more communicative links 210. Alternatively, it should be understood that such communication may also include wireless communication.

As shown at 408 of FIG. 4, the method 400 further includes replacing at least one component of a first subset 306 of the wind turbines 202 with an upgraded component capable of satisfying one or more grid requirements. More specifically, in one embodiment, the subset 306 of wind turbines 202 may include from about 10% to about 50% of the plurality of wind turbines 202. In further embodiments, the subset 306 of wind turbines 202 may include any suitable percentage of wind turbines 202 in the wind farm 200 that is less than 100% of the turbines 202.

In addition, shown in the illustrated embodiment of FIG. 6, the replaced component(s) of the wind turbines 202 may include an upgraded power converter 320 of each of the wind turbines 202 in the subset 306. As such, the upgraded power converters 320 may include new features relative to the features of the existing power converters 120. Further, in exemplary embodiments, one or more of these features may be a technologically advanced component (relative to the corresponding component of the existing power converter) that facilitates the implementation of newer, more efficient technology. More specifically, in the present disclosure, the upgraded power converters 320 are capable of staying connected to the power grid 150 during various adverse grid events. Thus, the upgraded power converters 320 are required with improved capabilities such as zero voltage ride through, low voltage ride through, and/or high voltage ride through.

Thus, referring still to FIG. 4, as shown at 410, the method 400 includes controlling the wind farm 200 via the upgraded farm-level controller 304. More specifically, in certain embodiments, the upgraded farm-level controller 304 may control the wind farm 200 by controlling the subset 306 of wind turbines 202 via the upgraded power converters 320 and controlling the remaining wind turbines 202 (e.g. with a second subset 308) via existing power converters 120.

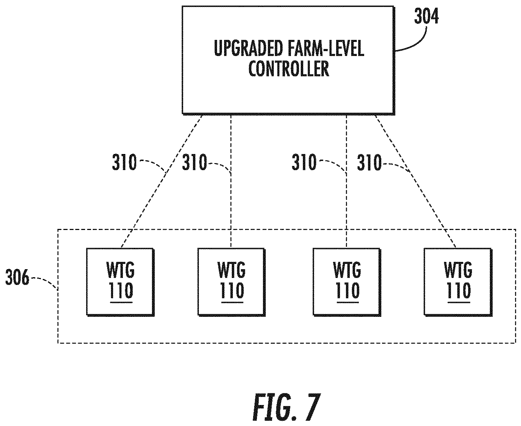

In further embodiments, the upgraded farm-level controller 304 may also control the subset 306 of wind turbines 202 so as to satisfy one or more frequency droop requirements of the power grid 150. For example, as shown in FIG. 7, the upgraded farm-level controller 304 may communicate an upgraded network protocol 310 with each of the wind turbines 202 in the subset 306 so as to satisfy one or more frequency droop requirements. More specifically, as shown, the upgraded network protocol 310 is configured to drive the generators 110 of the subset 306 of wind turbines 202 to run in parallel so that loads are shared amount said generators 110 in proportion to their power rating.

This written description uses examples to disclose the invention, including the preferred mode, and also to enable any person skilled in the art to practice the invention, including making and using any devices or systems and performing any incorporated methods. The patentable scope of the invention is defined by the claims.

## Claims

1. A method (400) for controlling a wind farm (200) connected to a power grid (150), the wind farm (200) having a plurality of wind turbines (202), the method (400) comprising:
terminating (402) use of an existing farm-level controller (204) of the wind farm (200); installing (404) an upgraded farm-level controller (304) in place of the existing farm-level controller (204);
communicatively coupling (406) the upgraded farm-level controller (304) to each of the plurality of wind turbines (202);
replacing (408) at least one component of a subset (306) of the wind turbines (202) with an upgraded component capable of satisfying one or more grid requirements; wherein the at least one upgraded component comprises an upgraded power converter (320) of each of the wind turbines in the subset (306); and,
controlling (410) the wind farm (200) via the upgraded farm-level controller (304);
wherein controlling (410) the wind farm (200) via the upgraded farm-level controller (304) comprises controlling the subset (306) of the wind turbines (202) via the upgraded power converters (320) and controlling the remaining wind turbines via existing power converters (120); and
wherein the subset (306) of wind turbines comprises from about 10% to about 50% of the plurality of wind turbines (202).

2. The method (400) of any of the preceding claims, further comprising controlling the subset (306) of wind turbines so as to satisfy one or more frequency droop requirements of the power grid (150).

3. The method (400) of claim 2, wherein controlling the subset (306) of wind turbines so as to satisfy one or more frequency droop requirements of the power grid (150) further comprises communicating, via the upgraded farm-level controller (304), an upgraded network protocol with each of the wind turbines in the subset (306).

4. The method (400) of any of the preceding claims, further comprising removing the existing farm-level controller (204) from the wind farm (200).

5. The method (400) of any of the preceding claims, wherein the one or more grid requirements comprise at least one zero voltage ride through, low voltage ride through, or high voltage ride through.

6. A wind farm management system (300), comprising:
an upgraded farm-level controller (304) installed in place of an existing farm-level controller (204);
a plurality of wind turbines (202) each comprising a turbine-level controller (132), the turbine- level controllers (132) communicatively coupled to the upgraded farm-level controller (304);
wherein a first subset (306) of the wind turbines (202) comprises an upgraded power converter (320) and a second subset (308) of the wind turbines (202) comprises an existing power converter (120), each of the upgraded power converters (320) capable of satisfying one or more grid requirements;
wherein the upgraded farm-level controller (304) is configured to control the first subset (306) of the wind turbines (202) via the upgraded power converters (320) and the second subset (308) of the wind turbines (202) via existing power converters (120); and
wherein the first subset (306) of the wind turbines (202) comprises from about 10% to about 50% of the plurality of wind turbines (202).

7. The wind farm management system (300) of claim 6, wherein the one or more grid requirements comprise at least one zero voltage ride through, low voltage ride through, or high voltage ride through.

## Patentansprüche

1. Verfahren (400) zur Steuerung eines Windparks (200), der an ein Versorgungsnetz (150) angeschlossen ist, wobei der Windpark (200) eine Vielzahl von Windkraftanlagen (202) aufweist, wobei das Verfahren (400) umfasst:
Beenden (402) der Verwendung einer existierenden Steuerung (204) auf Parkebene des Windparks (200); Installieren (404) einer aktualisierten Steuerung (304) auf Parkebene anstelle der bestehenden Steuerung (204) auf Parkebene;
kommunikatives Verbinden (406) der aktualisierten Steuerung auf Parkebene (304) mit jeder der Vielzahl von Windkraftanlagen (202);
Ersetzen (408) mindestens einer Komponente einer Teilmenge (306) der Windkraftanlagen (202) durch eine aktualisierte Komponente, die in der Lage ist, eine oder mehrere Anforderungen des Versorgungsnetzes zu erfüllen; wobei die mindestens eine aktualisierte Komponente einen aktualisierten Stromrichter (320) für jede der Windkraftanlagen in der Teilmenge (306) aufweist; und,
Steuern (410) des Windparks (200) mittels der aktualisierten Steuerung auf Parkebene (304);
wobei die Steuerung (410) des Windparks (200) über die aktualisierte Steuerung auf Parkebene (304) die Steuerung der Teilmenge (306) der Windkraftanlagen (202) mittels der aktualisierten Stromrichter (320) und das Steuern der übrigen Windkraftanlagen mittels der existierenden Stromrichter (120) umfasst; und
wobei die Untergruppe (306) der Windkraftanlagen etwa 10% bis etwa 50% der Vielzahl der Windkraftanlagen (202) umfasst.

2. Verfahren (400) nach einem der vorhergehenden Ansprüche ferner umfassend das Steuern der Untergruppe (306) von Windkraftanlagen, um eine oder mehrere Frequenzabfallanforderungen des Versorgungsnetzes (150) zu erfüllen.

3. Verfahren (400) nach Anspruch 2, wobei das Steuern der Untergruppe (306) von Windkraftanlagen, um eine oder mehrere Frequenzabfallanforderungen des Versorgungsnetzes (150) zu erfüllen, ferner das Übermitteln, über die aktualisierte Steuerung (304) auf Parkebene, eines aktualisierten Netzwerkprotokolls mit jeder der Windkraftanlagen in der Untergruppe (306) umfasst.

4. Verfahren (400) nach einem der vorhergehenden Ansprüche, ferner umfassend das Entfernen der existierenden Steuerung (204) auf Parkebene aus dem Windpark (200).

5. Verfahren (400) nach einem der vorhergehenden Ansprüche, wobei die eine oder mehrere Anforderungen an das Versorgungsnetz mindestens ein Nullspannungs-Ride-Through, ein Niederspannungs-Ride-Through oder ein Hochspannungs-Ride-Through umfassen.

6. Windparkmanagementsystem (300), umfassend:
eine aktualisierte Steuerung (304) auf Parkebene, die anstelle einer existierenden Steuerung (204) auf Parkebene installiert ist;
eine Vielzahl von Windkraftanlagen (202), die jeweils eine Steuerung (132) auf Turbinenebene aufweisen, wobei die Steuerungen (132) auf Turbinenebene kommunikativ mit der aktualisierten Steuerung (304) auf Parkebene verbunden sind;
wobei eine erste Teilmenge (306) der Windkraftanlagen (202) einen aktualisierten Stromrichter (320) umfasst und eine zweite Teilmenge (308) der Windkraftanlagen (202) einen existierenden Stromrichter (120) aufweist, wobei jeder der aktualisierten Stromrichter (320) in der Lage ist, eine oder mehrere Versorgungsnetzanforderungen zu erfüllen;
wobei die aktualisierte Steuerung (304) auf Parkebene derart konfiguriert ist, dass sie die erste Teilmenge (306) der Windkraftanlagen (202) mittels der aktualisierten Stromrichter (320) und die zweite Teilmenge (308) der Windkraftanlagen (202) mittels eines existierenden Stromrichter (120) steuert; und
wobei die erste Teilmenge (306) der Windkraftanlagen (202) etwa 10% bis etwa 50% der Vielzahl der Windkraftanlagen (202) umfasst.

7. Windparkmanagementsystem (300) nach Anspruch 6, wobei die eine oder mehrere Anforderungen an das Versorgungsnetz mindestens ein Nullspannungs-Ride-Through, ein Niederspannungs-Ride-Through oder ein Hochspannungs-Ride-Through umfassen.

## Revendications

1. Procédé (400) permettant de commander un parc éolien (200) connecté à un réseau électrique (150), le parc éolien (200) ayant une pluralité d'éoliennes (202), le procédé (400) comprenant :
la cessation (402) de l'utilisation d'un dispositif de commande existant au niveau d'un parc éolien (204) du parc éolien (200) ; l'installation (404) d'un dispositif de commande amélioré au niveau d'un parc éolien (304) à la place du dispositif de commande existant au niveau d'un parc éolien (204) ;
le couplage en communication (406) du dispositif de commande amélioré au niveau d'un parc éolien (304) avec chacune de la pluralité d'éoliennes (202) ;
le remplacement (408) d'au moins un composant d'un sous-ensemble (306) des éoliennes (202) avec un composant amélioré capable de satisfaire une ou plusieurs exigences de réseau ; au moins un composant amélioré comprenant un convertisseur de puissance amélioré (320) de chacune des éoliennes dans le sous-ensemble (306) ; et,
la commande (410) du parc éolien (200) par le biais du dispositif de commande amélioré au niveau d'un parc éolien (304) ;
dans lequel la commande (410) du parc éolien (200) par l'intermédiaire du dispositif de commande amélioré au niveau d'un parc éolien (304) comprend la commande du sous-ensemble (306) des éoliennes (202) par l'intermédiaire des convertisseurs de puissance améliorés (320) et la commande des éoliennes restantes par l'intermédiaire de convertisseurs de puissance existants (120) ; et
dans lequel le sous-ensemble (306) d'éoliennes comprend d'environ 10 % à environ 50 % de la pluralité d'éoliennes (202).

2. Procédé (400) selon l'une quelconque des revendications précédentes, comprenant en outre la commande du sous-ensemble (306) d'éoliennes de façon à satisfaire une ou plusieurs exigences de dérive de fréquence du réseau électrique (150).

3. Procédé (400) selon la revendication 2, dans lequel la commande du sous-ensemble (306) d'éoliennes de façon à satisfaire une ou plusieurs exigences de dérive de fréquence du réseau électrique (150) comprend en outre la communication, par l'intermédiaire du dispositif de commande amélioré au niveau d'un parc éolien (304), d'un protocole de réseau amélioré avec chacune des éoliennes dans le sous-ensemble (306).

4. Procédé (400) selon l'une quelconque des revendications précédentes, comprenant en outre le retrait du dispositif de commande existant au niveau d'un parc éolien (204) du parc éolien (200).

5. Procédé (400) selon l'une quelconque des revendications précédentes, dans lequel la ou les exigences de réseau comprennent au moins une traversée de tension nulle, une traversée de tension basse ou une traversée de tension haute.

6. Système de gestion de charge de parc éolien (300) comprenant :
un dispositif de commande amélioré au niveau d'un parc éolien (304) installé à la place d'un dispositif de commande existant au niveau d'un parc éolien (204) ;
une pluralité d'éoliennes (202) comprenant chacune un dispositif de commande au niveau de la turbine (132), les dispositifs de commande au niveau de la turbine (132) étant couplés de manière communicative au dispositif de commande amélioré au niveau d'un parc éolien (304) ;
dans lequel un premier sous-ensemble (306) des éoliennes (202) comprend un convertisseur de puissance amélioré (320) et un second sous-ensemble (308) des éoliennes (202) comprend un convertisseur de puissance existant (120), chacun des convertisseurs de puissance améliorés (320) pouvant satisfaire une ou plusieurs exigences de réseau ;
dans lequel le dispositif de commande amélioré au niveau d'un parc éolien (304) est configuré pour commander le premier sous-ensemble (306) des éoliennes (202) par le biais des convertisseurs de puissance améliorés (320) et le second sous-ensemble (308) des éoliennes (202) par le biais des convertisseurs de puissance existants (120) ; et
dans lequel le premier sous-ensemble (306) des éoliennes (202) comprend d'environ 10 % à environ 50 % de la pluralité d'éoliennes (202).

7. Système de gestion de parc éolien (300) selon la revendication 6, dans lequel la ou les exigences de réseau comprennent au moins une traversée de tension nulle, une traversée de tension basse ou une traversée de tension haute.
